# FASCICULE DE BREVET EUROPEEN

(11) **EP 0 963 301 B1**
(45) Date de publication et mention de la délivrance du brevet: **05.06.2002**
(21) Numéro de dépôt: 98913556.1
(22) Date de dépôt: 18.02.1998
(51) Int. Cl.: B60C 9/22, B60C 9/20

(54) **PNEUMATIQUE DE RAPPORT DE FORME H/S INFERIEUR OU EGAL A 0,6**
REIFEN MIT HÖHE-ZU-BREITEVERHÄLTNIS, DAS KLEINER ALS ODER GLEICH 0,6 IST
TYRE WITH H/S FORM RATIO LESS OR EQUAL TO 0.6

(30) Priorité: 24.02.1997 FR 9702277
(43) Date de publication de la demande: 15.12.1999
(73) Titulaire: COMPAGNIE GENERALE DES ETABLISSEMENTS MICHELIN-MICHELIN & CIE, 63040 Clermont-Ferrand Cédex (FR)
(72) Inventeur: CLUZEL, Guy, F-63110 Beaumont (FR)
(74) Mandataire: Le Cam, Stéphane
(86) Numéro de dépôt international: EP9800911
(87) Numéro de publication internationale: WO9836920

(56) Documents cités:
- WO-A-96/20095
- FR-A- 2 501 126
- GB-A- 2 064 445
- PATENT ABSTRACTS OF JAPAN vol. 017, no. 389 (M-1449), 21 juillet 1993 & JP 05 069702 A (TOYO TIRE & RUBBER CO LTD), 23 mars 1993,
- PATENT ABSTRACTS OF JAPAN vol. 12, no. 152 (M-695), 11 mai 1988 & JP 62 273837 A (YOKOHAMA RUBBER CO. LTD.), 27 novembre 1987,

## Description

L'invention concerne un pneumatique à armature de carcasse radiale ancrée dans chaque bourrelet à au moins une tringle, et comprenant une armature de sommet constituée par au moins deux nappes dites de travail, superposées et formées de fils ou câbles parallèles entre eux dans chaque nappe et croisés d'une à la suivante en formant avec la direction circonférentielle du pneumatique des angles au plus égaux à 40° en valeur absolue.

Elle concerne plus particulièrement un pneumatique du type "Poids-Lourds", dont le rapport de la hauteur sur jante H sur sa largeur axiale maximale S est au plus égal à 0,60, et destiné à équiper un véhicule de moyen ou fort tonnage, tel que camion, autobus, remorque, etc.

Il est très largement connu d'utiliser dans un pneumatique des armatures de sommet composées d'une part de nappes dites de travail formées de câbles faisant avec la direction circonférentielle un certain angle, et d'autre part de nappes additionnelles formées de câbles orientés sensiblement circonférentiellement. Un tel exemple de structure est montré et décrit dans le brevet US 3 677 319, les nappes de travail étant formées d'éléments métalliques orientés à des angles compris entre 18° et 75°, alors que les nappes additionnelles sont formées de câbles textiles orientés à 0°. Une telle architecture permet de concilier les qualités contradictoires à obtenir par le pneumatique: tenue de route du véhicule et confort, résistance à l'usure et résistance au roulement par exemple. Les nappes textiles additionnelles peuvent être disposées soit sous, soit sur, soit entre les nappes de câbles métalliques, la largeur de l'ensemble textile étant compris entre 25 et 75 % de la largeur de la structure métallique.

Le brevet FR 2 419 185 enseigne que le type de pneumatique concerné, à rapport H/S faible, bien que présentant de nombreux avantages, comporte aussi un certain nombre d'inconvénients, tel que l'adhérence médiocre de la zone équatoriale de la bande de roulement ou une localisation des pressions élevées dans la région des bords de bande de roulement, dues au raccourcissement de l'aire de contact dans le sens longitudinal du pneumatique. Afin de remédier auxdits inconvénients, le brevet FR cité préconise de disposer entre l'armature de carcasse et la nappe de travail radialement intérieure, dans deux zones distantes du plan équatorial, deux blocs limiteurs constitués chacun de deux nappes superposées de câbles inextensibles, croisés d'une nappe à l'autre en faisant avec la direction circonférentielle des angles opposés, au plus égaux en valeur absolue à la moitié du plus petit angle utilisé dans les nappes de travail, et différents de 0°.

Afin d'améliorer l'endurance de l'armature de sommet du pneumatique "Poids-Lourds" de rapport de forme au plus égal à 0,6, les deux solutions citées ci-dessus n'ont pas donné entière satisfaction, le problème d'endurance posé par le pneumatique de l'espèce considéré devenant très compliqué: le manque d'endurance concerne aussi bien le manque de résistance à la séparation entre extrémités de nappes de sommet que le manque de résistance à la fatigue des câbles de la portion d'armature de carcasse dont le profil méridien est parallèle au profil de l'armature de sommet et que le manque de résistance à la séparation entre armature de carcasse et armature de sommet.

Afin d'améliorer ladite endurance, la demande WO 96/20095, montrant le préambule de la revendication 1, au nom de la demanderesse, décrit une armature de sommet comprenant au moins deux nappes de sommet de travail en câbles inextensibles, croisés d'une nappe à la suivante en faisant avec la direction circonférentielle des angles compris entre 10° et 45°, lesdites nappes ayant des largeurs au moins égales à 80 % de la largeur axiale maximale SO de l'armature de carcasse, et disposées, d'une part entre l'armature de carcasse et la nappe de travail radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle, la largeur axiale de ladite nappe étant au moins égale à 0,7 S0, et son module d'élasticité à la traction étant au plus égal au module du même nom de la nappe de travail la plus extensible.

Malgré les progrès réalisés, un tel pneumatique de rapport de forme H/S au plus égal à 0,45 (H étant la hauteur du pneumatique sur sa jante de service et S sa largeur axiale maximale), et destiné à remplacer l'ensemble de deux pneumatiques jumelés sur essieu moteur, se doit d'être amélioré du point de vue endurance globale pour supporter positivement la comparaison avec ledit ensemble, et en particulier se doit d'être amélioré en ce qui concerne la résistance à la séparation entre armature de carcasse et armature de sommet et résistance à la fatigue des câbles orientés circonférentiellement de la nappe additionnelle.

Il eut été logique de penser qu'une modification d'architecture devait concerner les deux régions où sont situées les extrémités de la nappe de câbles orientés avec un angle au moins égal à 60° et de la première nappe de travail, et qu'une solution possible propre à satisfaire le double problème posé aurait été d'augmenter la largeur de la nappe à câbles circonférentiels. A la grande surprise de l'inventeur, si effectivement il s'est avéré nécessaire d'augmenter le nombre de câbles circonférentiels, cet accroissement ne doit pas se faire par élargissement de la nappe de câbles circonférentiels mais par addition d'une seconde nappe additionnelle de câbles circonférentiels, de faible largeur axiale, et disposée radialement au-dessus de la deuxième nappe de travail, c'est-à-dire dans le prolongement, respectivement de chaque côté de l'armature de sommet, de la nappe de câbles élastiques radialement la plus à l'extérieur, dite de protection, et en recouvrant les extrémités de la nappe de câbles circonférentiels.

Ainsi, le pneumatique, conforme à l'invention, comprenant une armature de carcasse radiale surmontée d'une armature de sommet comprenant au moins deux nappes de sommet de travail en câbles inextensibles, croisés d'une nappe à la suivante en faisant avec la direction circonférentielle des angles compris entre 10° et 45°, lesdites nappes ayant des largeurs au moins égales à 80 % de la largeur axiale maximale de l'armature de carcasse, et disposées, d'une part entre l'armature de carcasse et la nappe de travail radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une première nappe additionnelle formée d'éléments métalliques, orientés sensiblement parallèlement à la direction circonférentielle, la largeur axiale de ladite nappe étant au moins égale à 0,7 fois la largeur axiale maximale de l'armature de carcasse, et dont le module d'élasticité à la traction étant au plus égal au module du même nom de la nappe de travail la plus extensible, est caractérisé en ce qu'est disposée, radialement au-dessus de la nappe de sommet de travail radialement la plus à l'extérieur et de chaque côté du pneumatique, une deuxième nappe additionnelle, formée d'éléments métalliques orientés sensiblement parallèlement à la direction circonférentielle, de faible largeur, sensiblement centrée sur l'extrémité de la première nappe additionnelle, de manière à ce que ses propres extrémités soient axialement distantes d'au moins 10 mm de l'extrémité de la première nappe additionnelle disposée entre les deux nappes de travail.

Il faut entendre par câble inextensible un câble, par exemple en acier, qui a un allongement relatif inférieur à 0,2 % à 10 % de la charge de rupture.

Des fils ou câbles orientés sensiblement parallèlement à la direction circonférentielle sont des fils ou câbles qui font avec ladite direction des angles compris dans l'intervalle + 2,5°, - 2,5° autour de 0°.

Un module d'élasticité à la traction d'une nappe de câbles résulte de la contrainte de traction, exercée selon la direction des câbles, nécessaire pour obtenir un allongement relatif donné ε, ledit module étant un module tangent. Par module d'élasticité de la nappe additionnelle au plus égal au module du même nom de la nappe de travail la plus extensible, il faut entendre que le module tangent de la nappe additionnelle, quelque soit l'allongement relatif, est au plus égal au module tangent de la nappe de travail la plus extensible quelque soit l'allongement relatif, la nappe la plus extensible étant la nappe qui, pour chaque valeur de contrainte de traction, présente un allongement relatif supérieur à celui de l'autre nappe pour la même contrainte.

De manière avantageuse, le module de la deuxième nappe additionnelle est égal à celui de la première nappe additionnelle, et sera tel qu'il soit faible pour un allongement relatif compris entre 0 % et 0,4 %, et au plus égal au module d'élasticité à la traction le plus élevé de la nappe de travail la plus extensible, pour les allongements relatifs supérieurs à 0,4 %.

Dans le cadre ci-dessus, les nappes additionnelles peuvent être formées de câbles dits élastiques, présentant une courbe contrainte de traction en fonction de l'allongement relatif ayant des pentes faibles pour les faibles allongements et une pente sensiblement constante et forte pour les allongements supérieurs. Les nappes additionnelles peuvent aussi être formées de câbles orientés circonférentiellement et coupés de manière à former des tronçons de longueur très inférieure à la circonférence de la nappe la moins longue, mais préférentiellement supérieure à 0,1 fois ladite circonférence, les coupures entre tronçons étant axialement décalées les unes par rapport aux autres. Un tel mode de réalisation permet de conférer, de manière simple, aux nappes additionnelles un module donné, quel qu'il soit.

La deuxième nappe additionnelle a sa largeur sensiblement centrée sur l'extrémité de la première nappe additionnelle, de manière à ce que ses propres extrémités soient axialement distantes de l'extrémité de la première nappe additionnelle d'au moins 10 mm, une faible largeur de nappe étant une largeur comprise entre 15 et 50 mm. Il est avantageux que ladite deuxième nappe additionnelle prolonge axialement la nappe radialement la plus extérieure dite de protection et généralement formée de câbles dits élastiques faisant avec la direction circonférentielle un angle de même sens et sensiblement de même valeur que l'angle de la nappe de travail sous-jacente, ledit prolongement se faisant en ne laissant entre l'extrémité axialement intérieure de la nappe additionnelle et l'extrémité axialement extérieure de la nappe de câbles élastiques qu'un intervalle de faible largeur (< 5 mm).

Les caractéristiques et avantages de l'invention seront mieux compris à l'aide de la description qui suit et qui se réfère au dessin, illustrant à titre non limitatif des exemples d'exécution, et sur lesquels :

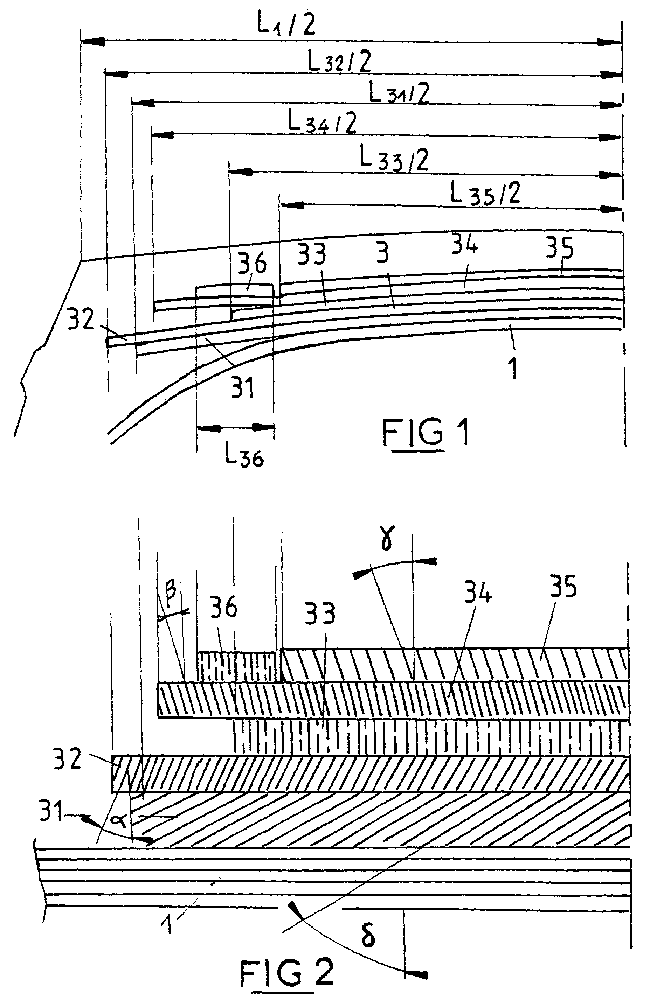

- la figure 1 représente schématiquement, vu en section méridienne, une armature de sommet conforme à l'invention,
- la figure 2 représente, vu en plan et en écorché, l'armature de sommet de la figure 1.

Le pneumatique P, de dimension 495/45 R 22.5 X, a un rapport de forme H/S égal à 0,45, H étant la hauteur du pneumatique P sur sa jante de montage et S sa largeur axiale maximale. Ledit pneumatique P comprend une armature de carcasse radiale 1 ancrée dans chaque bourrelet à au moins une tringle en formant un retournement, et formée d'une seule nappe de câbles métalliques. Cette armature de carcasse 1 est frettée par une armature de sommet 3, formée radialement de l'intérieur à l'extérieur :
- d'une première nappe 31 de câbles métalliques inextensibles orientés par rapport à la direction circonférentielle d'un angle δ égal à 65°, ladite nappe ayant pour objet de reprendre une grande partie des efforts de compression axiale auxquels peut être soumise l'armature de carcasse radiale 1,
- radialement au dessus et recouvrant la nappe précédente dite de triangulation, d'une première nappe de travail 32 formée de câbles métalliques inextensibles orientés d'un angle α, égal dans le cas montré à 18°,
- surmontant la première nappe de travail 32, d'une première nappe additionnelle 33 formée d'éléments métalliques inextensibles de longueur circonférentielle sensiblement égale à 1/6 de la longueur circonférentielle de la nappe 33, lesdits éléments étant orientés à 0°,
- puis d'une deuxième nappe de travail 34 formée de câbles métalliques identiques à ceux de la première nappe de travail 32, et faisant avec la direction circonférentielle un angle β, opposé à l'angle α et, dans le cas montré, égal audit angle α de 18°, (mais pouvant être différent dudit angle α),
- puis d'une dernière nappe de câbles dits élastiques orientés par rapport à la direction circonférentielle d'un angle γ de même sens que l'angle β et égal audit angle β, mais pouvant être différent dudit angle), cette dernière nappe étant une nappe de protection,
- et enfin, de chaque côté du pneumatique, d'une deuxième nappe additionnelle 36 formée d'éléments métalliques inextensibles de longueur circonférentielle sensiblement égale à 1/6 de la longueur circonférentielle de la nappe 33, lesdits éléments étant orientés à 0°, c'est-à-dire d'éléments identiques à ceux de la première nappe additionnelle 33.

La largeur axiale L₃₂ de la première nappe de travail 32 est égale à 0,87 fois la largeur axiale maximale de la fibre moyenne de l'armature de carcasse 1, soit 416 mm, ce qui est, pour un pneumatique de forme usuelle, sensiblement inférieur à la largeur L₁ de la bande de roulement, qui est égale, dans le cas étudié, à 430 mm. La largeur axiale L₃₄ de la deuxième nappe de travail 34 est égale à 0,8 fois la largeur axiale maximale de l'armature de carcasse, soit 400 mm. La nappe de triangulation 31 a une largeur axiale L₃₁ égale à la moyenne arithmétique des largeurs des deux nappes de travail 32 et 34, et dans ce cas à 408 mm. Quant à la largeur axiale L₃₃ de la nappe additionnelle 33, au moins égale à 0,7 fois la largeur axiale maximale de l'armature de carcasse, elle est égale à 350 mm, ce qui représente 0,73 fois ladite largeur axiale maximale. En fait, la largeur L₃₃ de la nappe additionnelle 33 est inférieure à la largeur L₃₂ (L₃₄) de la nappe de travail la moins large, sans cependant être trop inférieure de manière à contribuer efficacement à la diminution des températures de fonctionnement du pneumatique à proximité des extrémités des nappes de sommet de travail, qui sont les régions les plus pénalisées par l'échauffement et les séparations entre nappes. La dernière nappe de sommet 35, dite de protection, a une largeur L₃₅ plus faible que les précédentes, soit 320 mm. Quant à la largeur L₃₆ de la nappe 36, elle est, dans l'exemple cité, de 25 mm et telle que son axe de symétrie circonférentiel est radialement au-dessus de l'extrémité de la première nappe additionnelle 33. L'intervalle entre l'extrémité axialement intérieure de la nappe 36 et l'extrémité de la nappe dite protection 35 est alors de 2,5 mm.

Le module élastique de traction, de la nappe de travail 32, ou de la nappe de travail 34, identique dans le cas présent, puisque formée des mêmes câbles métalliques 27.23 frettés, inextensibles et continus sur toute la largeur de la nappe, lesdits câbles étant disposés avec le même pas, c'est-à-dire avec le même espace entre câbles, est égal à 5 300 daN/mm2 à 0,4 % d'allongement relatif. Le module, du même nom et mesuré dans les mêmes conditions, de la nappe 31 dite de triangulation, formée de câbles métalliques 9.23 frettés, est égal à 6 925 daN/mm2. Quant aux deux nappes additionnelles 33 et 36, elles sont formées de câbles métalliques 27.23 frettés, et coupés de sorte à avoir des tronçons de câbles dont la longueur circonférentielle est égale à 1/6 de la longueur circonférentielle de la première nappe 33 la moins longue, ce qui confère aux deux nappes un module tangent d'élasticité à la traction commun et égal à 3 310 daN/mm2 pour un allongement relatif de 0,4 %.

Les nappes additionnelles 33 et 36 peuvent aussi être formées de câbles dits élastiques bimodule, c'est-à-dire des câbles présentant des allongements relatifs à la rupture supérieurs à 2,5 % et des courbes force de traction allongement relatif présentant deux parties de pentes nettement différentes, telle que la courbe 17 montrée sur la figure 2 du brevet FR 1 188 486. Une élasticité, réduite des nappes 33 et 36 n'étant utile que lors de la conformation du pneumatique dans le moule de vulcanisation, un câble présentant un faible module de l'origine à 0,4% d'allongement relatif et un module, par exemple supérieur à 14 000 daN/mm2 pour les allongements relatifs supérieurs, permet d'obtenir aisément des nappes de câbles orientés sensiblement à 0° ayant, au dessus de 0,4% d'allongement relatif, un module de 5 200 daN/mm2.

Le pneumatique décrit ci-dessus a été testé, en ce qui concerne l'endurance, comparativement à un pneumatique témoin tel que décrit dans la demande internationale citée en référence. Dans des conditions identiques de charge (charge variable, augmentant par paliers à partir de 5 800 kg) et de pression (pression régulée de gonflage de 10 bars), les pneumatiques témoins ont réalisé 11 500 km sur volant (moyenne de 2 résultats) tandis que les pneumatiques conformes à l'invention ont réalisé 31 900 km (moyenne de 5 résultats), ce qui représente une amélioration très significative étant donné la sévérité du test.

## Revendications

1. Pneumatique P comprenant une armature de carcasse radiale (1), surmontée d'une armature de sommet (3) comprenant au moins deux nappes de sommet de travail (32, 34) en câbles inextensibles, croisés d'une nappe (32) à la suivante (34) en faisant avec la direction circonférentielle des angles (α, β) compris entre 10° et 45°, lesdites nappes ayant des largeurs L₃₂, L₃₄ au moins égales à 80% de la largeur axiale maximale SO de l'armature de carcasse (1) et, disposées, d'une part entre l'armature de carcasse (1) et la nappe de travail (32) radialement la plus proche de l'axe de rotation, une nappe (31) axialement continue, formée de câbles métalliques inextensibles faisant avec la direction circonférentielle un angle δ au moins égal à 60°, et dont la largeur axiale L₃₁ est au moins égale à la largeur axiale L₃₂, L₃₄ de la nappe de sommet de travail (32, 34) la plus courte, et d'autre part entre les deux nappes de sommet de travail (32) et (34) une première nappe additionnelle (33) formée d'éléments métalliques, orientés sensiblement parallèlement à la direction circonférentielle, la largeur axiale L₃₃ de ladite nappe étant au moins égale à 0,7 S0, et dont le module d'élasticité à la traction étant au plus égal au module du même nom de la nappe de travail (33, 34) la plus extensible, **caractérisé en ce qu'**est disposée, radialement au-dessus de la nappe de sommet de travail (34) radialement la plus à l'extérieur et de chaque côté du pneumatique P, une deuxième nappe additionnelle (36), formée d'éléments métalliques orientés sensiblement parallèlement à la direction circonférentielle, de faible largeur L₃₆ sensiblement centrée sur l'extrémité de la première nappe additionnelle (33), de manière à ce que ses propres extrémités soient axialement distantes d'au moins 10 mm de l'extrémité de la première nappe additionnelle (33) disposée entre les deux nappes de travail (32, 34).

2. Pneumatique P selon la revendication 1, **caractérisé en ce que** le module d'élasticité à la traction de la deuxième nappe additionnelle (36) est égal au module du même nom de la première nappe additionnelle (33).

3. Pneumatique P selon la revendication 2, **caractérisé en ce que** le module commun des nappes additionnelles (33, 36) est faible pour un allongement relatif compris entre 0% et 0,4%, et au plus égal au module d'élasticité à la traction le plus élevé de la nappe de travail la plus extensible, pour les allongements relatifs supérieurs à 0,4%.

4. Pneumatique P selon la revendication 3, **caractérisé en ce que** les nappes additionnelles (33, 36) sont formées de câbles dits élastiques, présentant une courbe contrainte de traction en fonction de l'allongement relatif ayant des pentes faibles pour les faibles allongements compris entre 0 et 0,4%, et une pente forte et sensiblement constante pour les allongements supérieurs.

5. Pneumatique P selon la revendication 3 **caractérisé en ce que** les nappes additionnelles sont formées de câbles orientés circonférentiellement, et coupés de manière à former des tronçons de longueur très inférieure à la circonférence de la nappe (33) la moins longue, les coupures entre tronçons étant axialement décalées les unes par rapport aux autres.

6. Pneumatique P selon l'une des revendications 1 à 5, **caractérisé en ce que** l'armature de sommet (3) comprend en outre, radialement le plus à l'extérieur, une nappe (35) dite de protection et formée de câbles élastiques faisant avec la direction circonférentielle un angle de même sens et sensiblement de même valeur que l'angle de la nappe de travail (34) sous-jacente, et **en ce que** la deuxième nappe additionnelle (36) a une largeur comprise entre 15 et 50 mm, ladite nappe additionnelle (36) prolongeant axialement la nappe de protection (35), et ledit prolongement se faisant en ne laissant entre l'extrémité axialement intérieure de la nappe additionnelle (36) et l'extrémité axialement extérieure de la nappe (35) de câbles élastiques qu'un intervalle inférieur à 5 mm.

## Patentansprüche

1. Reifen P mit einer Radialkarkasse (1), über der eine Scheitelbewehrung (3) angebracht ist, die mindestens zwei Scheitel-Arbeitslagen (32, 34) aus undehnbaren Seilen aufweist, die von einer Lage (32) zur folgenden (34) überkreuz laufen, während sie zur Umfangsrichtung Winkel (α, β) bilden, die zwischen 10° und 45° liegen, wobei die genannten Lagen Breiten L₃₂, L₃₄ aufweisen, die mindestens 80% der axialen, maximalen Breite der Karkassenbewehrung (1) betragen, wobei einerseits zwischen der Karkassenbewehrung (1) und der radial der Drehachse nächstgelegenen Arbeitslage (32) eine axial durchgehende Lage (31), die aus undehnbaren Metallseilen gebildet ist, die zur Umfangsrichtung einen Winkel δ bilden, der mindestens 60° beträgt, und deren axiale Breite L₃₁ mindestens gleich ist der axialen Breite L₃₂, L₃₄ der kürzesten Scheitel-Arbeitslage (32, 34), und andererseits zwischen den beiden Scheitel-Arbeitslagen (32) und (34) eine erste, zusätzliche Lage (33) angeordnet ist, die aus Metallelementen gebildet ist, die im wesentlichen parallel zur Umfangsrichtung ausgerichtet sind, wobei die axiale Breite der genannten Lage L₃₃ mindestens 0,7 S0 beträgt, und von der das Elastizitätsmodul hinsichtlich des Zuges höchstens gleich ist dem gleichnamigen Modul der am meisten dehnbaren Arbeitslage (33, 34), **dadurch gekennzeichnet, daß** radial über der radial am weitesten außenliegenden Arbeitslage (34) und auf jeder Seite des Reifens P eine zweite, zusätzliche Lage (36) angeordnet ist, die aus Metallelementen gebildet ist, die im wesentlichen parallel zur Umfangsrichtung ausgerichtet sind, und mit geringer Breite L₃₆, die im wesentlichen auf das Ende der ersten, zusätzlichen Lage (33) zentriert ist, und zwar derart, daß ihre eigenen Enden einen Axialabstand von mindestens 10 mm vom Ende der ersten, zusätzlichen Lage (33) aufweisen, die zwischen den beiden Arbeitslagen (32, 34) angeordnet ist.

2. Reifen P nach Anspruch 1, **dadurch gekennzeichnet, daß** der Zug-Elastizitätsmodul der zweiten, zusätzlichen Lage (36) gleich ist dem gleichnamigen Modul der ersten, zusätzlichen Lage (33).

3. Reifen P nach Anspruch 2, **dadurch gekennzeichnet, daß** der gemeinsame Modul der zusätzlichen Lagen (33, 36) für eine relative Dehnung gering ist, die zwischen 0% und 0,4% liegt, und für relative Dehnungen über 0,4% höchstens gleich ist dem höchsten Zug-Elastizitätsmodul der dehnbarsten Arbeitslage.

4. Reifen P nach Anspruch 3, **dadurch gekennzeichnet, daß** die zusätzlichen Lagen (33, 36) aus sogenannten elastischen Seilen gebildet sind, die eine Zugspannungskurve in Funktion der relativen Dehnung aufweisen, die geringe Steigungen für geringe Dehnungen aufweist, die zwischen 0 und 0,4% liegt, und eine kräftige und im wesentlichen konstante Steigung für die höheren Dehnungen.

5. Reifen P nach Anspruch 3, **dadurch gekennzeichnet, daß** die zusätzlichen Lagen aus Seilen gebildet sind, die in Umfangsrichtung ausgerichtet sind und derart zugeschnitten sind, daß Stücke mit einer Länge gebildet werden, die sehr viel kleiner ist als der Umfang der kürzesten Lage (33), und daß die Schnittstellen axial zueinander versetzt sind.

6. Reifen P nach einem der Ansprüche 1 bis 5, **dadurch gekennzeichnet, daß** die Scheitelbewehrung (3) außerdem radial am weitesten außen eine sogenannte Schutzlage (35) aufweist, die von elastischen Seilen gebildet ist, die zur Umfangsrichtung einen Winkel in derselben Richtung und im wesentlichen demselben Wert aufweist, wie den Winkel der darunterliegenden Arbeitslage (34), und daß die zweite, zusätzliche Lage (36) eine Breite aufweist, die zwischen 15 und 50 mm liegt, wobei die genannte, zusätzliche Lage (36) axial die Schutzlage (35) verlängert, und wobei die genannte Verlängerung erfolgt, indem sie zwischen dem axial inneren Ende der zusätzlichen Lage (36) und dem axial äußeren Ende der Lage (35) aus elastischen Seilen nur ein Intervall beläßt, das kleiner als 5 mm ist.

## Claims

1. A tyre P comprising a radial carcass reinforcement (1) surmounted by a crown reinforcement (3) comprising at least two working crown plies (32, 34) of inextensible cables, which are crossed from one ply (32) to the next (34), forming angles (α, β) of between 10° and 45° with the circumferential direction, said plies having widths L₃₂, L₃₄ at least equal to 80% of the maximum axial width of the carcass reinforcement (1) and, arranged, firstly, between the carcass reinforcement (1) and the working ply (32) radially closest to the axis of rotation, an axially continuous ply (31) formed of inextensible metal cables forming with the circumferential direction an angle δ of at least 60° and the axial width L₃₁ of which is at least equal to the axial width L₃₂, L₃₄ of the shortest working crown ply (32, 34), and, secondly, arranged between the two working crown plies (32) and (34), a first additional ply (33) formed of metallic elements which are oriented substantially parallel to the circumferential direction, the axial width L₃₃ of said ply being at least equal to 0.7 S0, and the modulus of elasticity upon traction of which is at most equal to the modulus of the same name of the most extensible working ply (33, 34), **characterised in that** there is arranged, radially above the radially outermost working crown ply (34) and on either side of the tyre P, a second additional ply (36) formed of metallic elements which are oriented substantially parallel to the circumferential direction, of low width L₃₆, substantially centred on the end of the first additional ply (33), and such that its own ends are axially distant by at least 10 mm from the end of the first additional ply (33) which is arranged between the two working plies (32, 34).

2. A tyre P according to Claim 1, **characterised in that** the modulus of elasticity upon traction of the second additional ply (36) is equal to the modulus of the same name of the first additional ply (33).

3. A tyre P according to Claim 2, **characterised in that** the common modulus of the additional plies (33, 36) is low for a relative elongation of between 0% and 0.4%, and at most equal to the greatest modulus of elasticity upon traction of the most extensible working ply, for relative elongations greater than 0.4%.

4. A tyre P according to Claim 3, **characterised in that** the additional plies (33, 36) are formed of so-called elastic cables, having a curve of tensile stress as a function of the relative elongation which has shallow gradients for the slight elongations of between 0 and 0.4% and a steep and substantially constant gradient for the higher elongations.

5. A tyre P according to Claim 3, **characterised in that** the additional plies are formed of cables oriented circumferentially and cut so as to form sections of a length very much less than the circumference of the least long ply (33), the cuts between sections being axially offset relative to each other.

6. A tyre P according to one of Claims 1 to 5, **characterised in that** the crown reinforcement (3) furthermore comprises, radially furthest to the outside, a so-called protective ply (35), formed of elastic cables forming an angle of the same direction and substantially of the same value as the angle of the subjacent working ply (34) with the circumferential direction, and **in that** the second additional ply (36) has a width of between 15 and 50 mm, said additional ply (36) axially extending the protective ply (35), and said extension being produced leaving only a gap of less than 5 mm between the axially inner end of the additional ply (36) and the axially outer end of the ply (35) of elastic cables.
